(19) Europäisches Patentamt / European Patent Office / Office européen des brevets

(11) **EP 3 484 962 B1**

(12) **EUROPEAN PATENT SPECIFICATION**

(45) Date of publication and mention of the grant of the patent:
**29.04.2020 Bulletin 2020/18**

(21) Application number: **17749552.0**

(22) Date of filing: **14.07.2017**

(51) Int Cl.:
*C09C 1/42* *(2006.01)*     *D21H 17/67* *(2006.01)*
*D21H 17/68* *(2006.01)*     *D21H 19/40* *(2006.01)*
*D21H 21/52* *(2006.01)*

(86) International application number:
**PCT/US2017/042032**

(87) International publication number:
**WO 2018/013877 (18.01.2018 Gazette 2018/03)**

(54) **CLAYS WITH LOW PACKING DENSITY**

TONERDEN MIT NIEDRIGER PACKUNGSDICHTE

ARGILES À FAIBLE DENSITÉ DE TASSEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.07.2016 US 201662362221 P**

(43) Date of publication of application:
**22.05.2019 Bulletin 2019/21**

(73) Proprietor: **WestRock MWV, LLC Atlanta, GA 30328 (US)**

(72) Inventors:
• **FUGITT, Gary P.**
 **Rockville**
 **Virginia 23146 (US)**
• **BUSHHOUSE, Steven G.**
 **Quinton**
 **Virginia 23141 (US)**
• **GINTHER, Scott**
 **Moseley**
 **VA 23120 (US)**

(74) Representative: **Coulson, Elizabeth Eve Coulson & Rule 13 Whitehall Road Rugby, Warwickshire CV21 3AE (GB)**

(56) References cited:
**EP-A2- 0 296 866**     **US-A1- 2009 239 047**
**US-A1- 2010 266 819**

**Description**

FIELD

This patent application is directed to clays that are modified to exhibit low packing density. Such clays may be used in a wide range of applications including paper and paperboard coatings, paints, architectural coatings and industrial coatings.

BACKGROUND

Pigments such as clay are used in many products including coatings and paints. In certain applications it is beneficial to use pigments that exhibit a low packing density or high bulk volume. Architectural, industrial and paperboard coatings, as well as paints, are often used to hide roughness or surface defects. Increasing the packing volume of a pigment increases the volume per weight of the coating or paint in which it is used. This results in greater coverage and better hiding performance. There are many examples of this. One example is US patent 8,142,887 by Fugitt et al. describing a method to increase the packing volume of pigments in paperboard coatings using a high shape factor pigment. Kaolin clay (from this point referred to as "clay") is a common inexpensive pigment used in many industrial applications. Clay is a naturally occurring plate-like mineral that is mined from the ground, and processed to make a wide variety of products. All of these products are typified by a wide range of particle sizes and particle shapes.

SUMMARY

US 2009/0239047A discloses a basecoat for paperboard comprising a pigment blend including a ground calcium carbonate component and a hyper platy clay component, wherein the ground calcium carbonate component has a coarse particle size distribution and the hyper platy clay component has an average aspect ration of at least about 40:1. This document teaches that the calcium carbonate component may have an average particle size of about 3 micrometers or more and that high sediment void volumes, eg in excess of 50%, are desirable.

US2010/0266819A discloses a base coat for paperboard comprising a pigment blend including a calcined clay component and a hyperplaty clay component, when the hyperplaty clay component has a shape factor of at least about 40:1. This document teaches that relatively high sediment void volumes provide high smoothness at relatively low coat weights, and discloses sediment void volumes in excess of 60%. In a preferred embodiment, at most about 60% of the calcined clay particles are less than 2 micrometers in diameter.

EP296866A discloses a particulate kaolin pigment which enhances gloss and printability when used as a coating pigment for paper and enhances light scattering and opacifying properties when incorporated as a filler in paper. The pigment is obtained by mixing a fine particle kaolin with an organic silicone compound. In one embodiment (Example 1) the kaolin is classified to 96% less than 2 micrometers ESD and the resulting pigment had a sedimentation void volume of 57.3% as determined by the relative sedimentation method (RSV).

In one aspect the invention provides composition comprising:

an amount of clay particles having an average shape factor below 60, a sediment void volume greater than 48%, and less than 30% by mass of particles less than 1 micrometer in size as measured by Sedigraph,

wherein the sediment void volume is measures as follows:

dispersing the clay in water to form a slurry at 50% by weight solids;

centrifuging a 70g sample of the slurry at 8000g for 90 minutes;

pouring the supernatant water off the settled clay and weighing the supernatant water X;

determining the weight of remaining water in the settled clay at $Y=70/2-X(g)$;

determining the volume of the remaining water as $Vw=Y/1$ g/cc;

determining the volume of the clay Vc as $70/2/Z$, where Z is a known density of the clay in g/cc; and determining the void volume percent as $Vw / (Vw+Vc) * 100\%$.

In another aspect the invention provides a composition comprising:

an amount of clay particles having an average shape factor below 60, a sediment void volume greater than 52% as measured using the method defined above, and less than 18% by mass of particles less than 1 micrometer in size as measured by Sedigraph.

The low packing density pigment can be used in any application where a low density, high volume composition is desired, such a paperboard coatings, spackle and architectural coatings.

Accordingly, the invention also provides the use of a composition as defined above in the manufacture of a paper or paperboard coating, a paint or an industrial or architectural coating.

The invention also provides a paper or paperboard comprising a composition as defined above.

The invention also provides paint comprising a composition as defined above.

Preferred features are defined in the dependent claims.

BRIEF DESCRIPTION OF THE DRAWINGS

Figure 1 is a graph for four standard clays showing cumulative mass percent vs. particle diameter recorded by a first measurement method (Sedigraph);

Figure 2 is a graph for the same clays showing cumulative mass percent vs. particle diameter recorded by a second measurement method (Digisizer);

Figure 3 is a graph for the clays after modification, showing cumulative mass percent vs. particle diameter recorded by the first measurement method;

Figure 4 is a graph for the clays after modification, showing cumulative mass percent vs. particle diameter recorded by the second measurement method;

Figure 5 is a graph for the standard clays showing frequency distribution of particle diameter recorded by the first measurement method (Sedigraph);

Figure 6 is a graph for the standard clays showing frequency distribution vs. particle diameter recorded by the second measurement method (Digisizer);

Figure 7 is a graph for the modified clays showing frequency distribution vs. particle diameter recorded by the first measurement method;

Figure 8 is a graph for the modified clays showing cumulative mass percent vs. particle diameter recorded by the second measurement method;

Figure 9 is a bar chart comparing sediment void volumes of the four standard clays and their modified counterparts;

Figure 10 is a graph for the four clays, showing sediment void volume vs. amount of standard clay;

Figure 11 is a graph for the four clays, showing sediment void volume vs. amount of particles below one micron diameter;

Figure 12 is a graph for a particular one of the four clays, showing cumulative mass percent vs. particle diameter, for mixtures of the standard and modified versions of the particular clay;

Figure 13 is a graph of sediment void volume for blends of the standard and modified clays with varying amounts of coarse calcium carbonate; and

Figure 14 is a graph for the modified clays, showing shape factor vs. cumulative mass percent.

DETAILED DESCRIPTION

Pigment materials such as clays, including kaolin clays, may usually be characterized by a distribution of particle sizes. The particle size distribution often plays a significant role in determining the usefulness of a pigment for various applications. Broad particle size distributions may tend to pack more closely and provide a denser structure that may be advantageous in certain application. Narrower particle size distributions, or particles with plate-like shapes, may tend to pack more loosely and provide a less dense structure that may be advantageous in other applications.

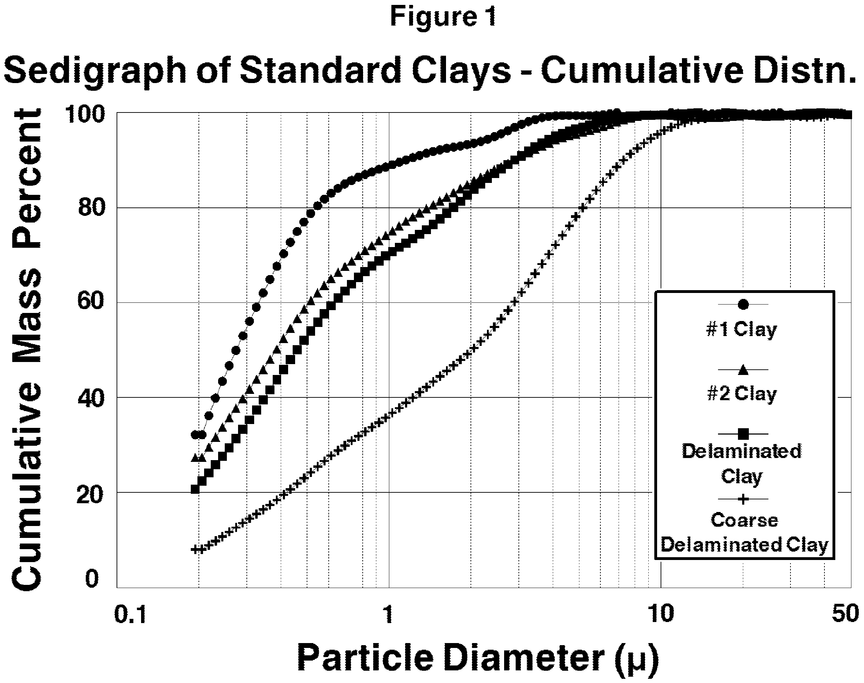

Figure 1 provides a graphical representation of the cumulative mass distribution vs particle diameter for four commercially available kaolin clays. These particular clays were chosen to represent the breadth of clays available commercially, and are reported to have shape factors significantly less than 60 (shape factor will be further described below). Each of the four clays represents a class of clay that is available from multiple suppliers. One key distinction between these clays is the average particle size, measured as the diameter at 50% on the cumulative mass curve. All four pigments contain particles of similar sizes, but have average particles sizes ranging from about $0.25\mu$ to $2\mu$ due to different proportions of the sizes present. The clays were:

- #1 Clay (HYDRAFINE® from Kamin) #1 is a relatively fine clay, but still has larger particles. #1 clays generally have about 85% particles below 1 micron, and 95% < 2 microns.

- #2 Clay (KAOBRITE® from Thiele) #2 clay is coarser and has about 75% particles < 1 micron, and 85% < 2 microns.

- Delaminated Clay (ASTRA-PLATE® from Imerys) - Delaminated clays are reported to have a higher shape factor than standard clays. Roughly, they have a reported shape factor of about 30 while standard clays have a shape factor of about 15. Delaminated clays have size distributions similar to a #2 clay.

- Coarse Delaminated clay (Nusurf from BASF) - This is a coarser pigment with a shape factor of about 30. It has about 35% particles < 1 micrometre, and 50% < 2 micrometres

In this description, the four clays described above are termed "standard" clays, meaning that they have not been altered yet by the modification to be described below. As used herein, the "particle size" of a pigment refers to the distribution of equivalent spherical diameter of the pigment, which may be measured using a particle size analyzer regardless of whether the particles are spherical (or near spherical) or non-spherical. The cumulative size distribution data presented in Figure 1 were collected using a SEDIGRAPH® 5120 particle size analyzer, which is commercially available from Micromeritics Instrument Corporation of Norcross, Georgia. This instrument measures the particle size distribution based on settling rate (Stokes Law) and reports distribution as a cumulative mass percent finer than a given equivalent spherical diameter. For the first three clays, particles below 0.2 micrometre (the lower end of the data) make up from 20-40% of the clay; and for the last clay, about 10% of the clay. For the first three clays, there are essentially no particles above 8 micrometres, and for the coarse delaminated clay, essentially no particles above about 15 micrometres.

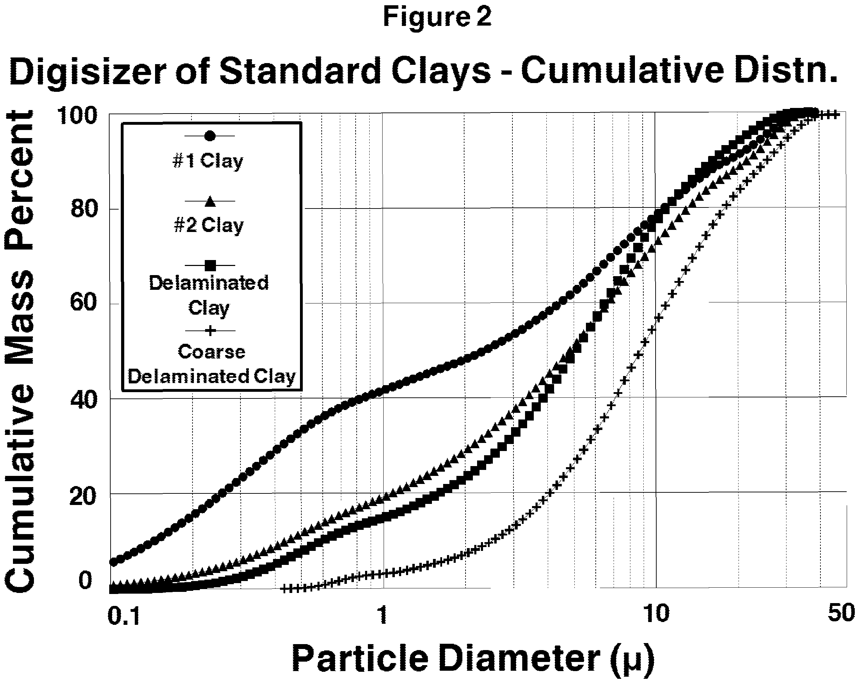

Another method of measuring particle diameter was used to generate the data in Figure 2, taken by a DIGISIZER Instrument made by Micromeritics. This method measures the occluded area of particles using a laser light scattering technique. This method is not dependent on settling rate although somewhat similar results may be obtained. The Digisizer (Figure 2) light scattering results indicate generally larger particles than shown by the Sedigraph (Figure 1) particle settling data.

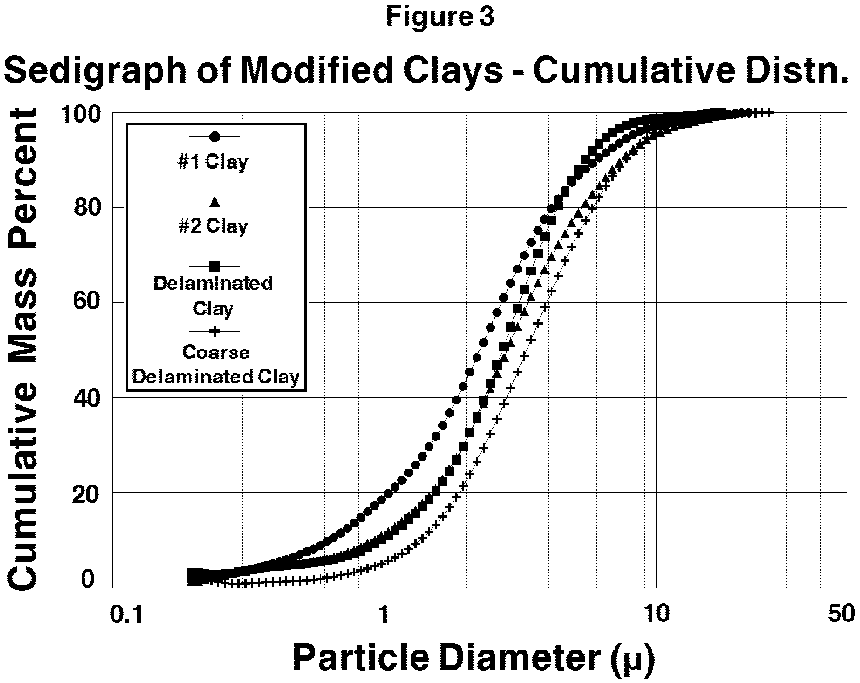

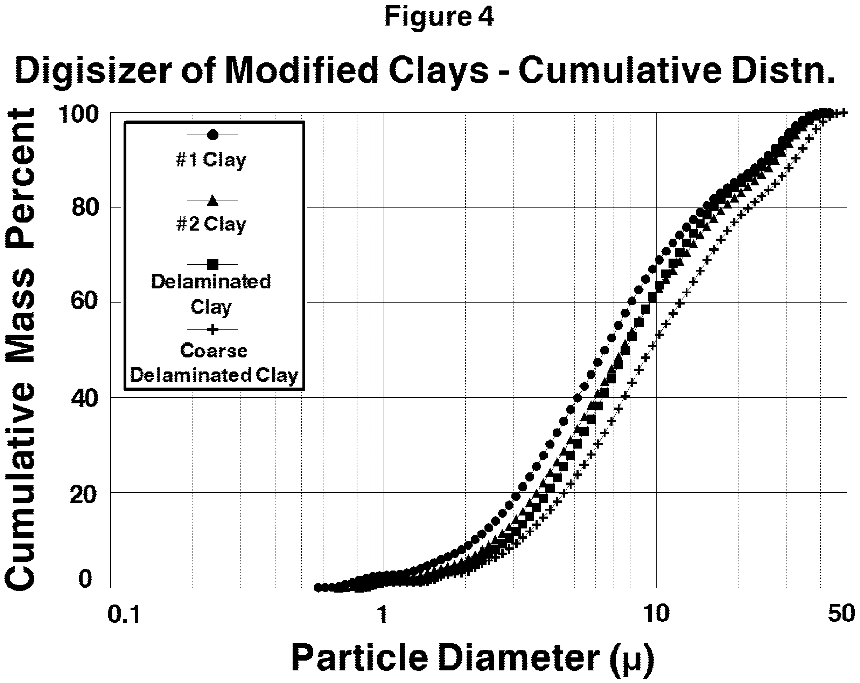

These standard clays are commercial clays, and have therefore already experienced refinement and processing. One common step in refining crude clays into the commercial products is centrifugal separation. Centrifugation greatly increases gravity effects to segregate particles based on size. This process is often used to make multiple products using the same crude clay source. The clays were next 'modified' using a lab technique that also uses gravity forces to separate particles by size. Instead of dynamic centrifugation, we used a static process. The clays were diluted in water to 10% solids by weight and allowed to settle for 24 hours. After 24 hours, the liquid portion was poured off leaving a sediment in the bottom of the container. This sediment contained the coarse portion of the size distribution, while the finest particles remained suspended in the liquid. The sediment was re-suspended and dispersed and will be described herein as a modified clay. Each of the four 'standard' clays listed above was modified using this method, and the cumulative particle size distributions are shown in Figure 3 (Sedigraph method) and Figure 4 (Digisizer method). The cumulative particle size distributions in Figs. 3 and 4 show somewhat S-shaped curves (especially Figure 3) as are characteristic of a fairly unimodal distribution. The percentage of particles below 1 micron is greatly reduced, these fine particles having been removed in the supernatant from the settling step.

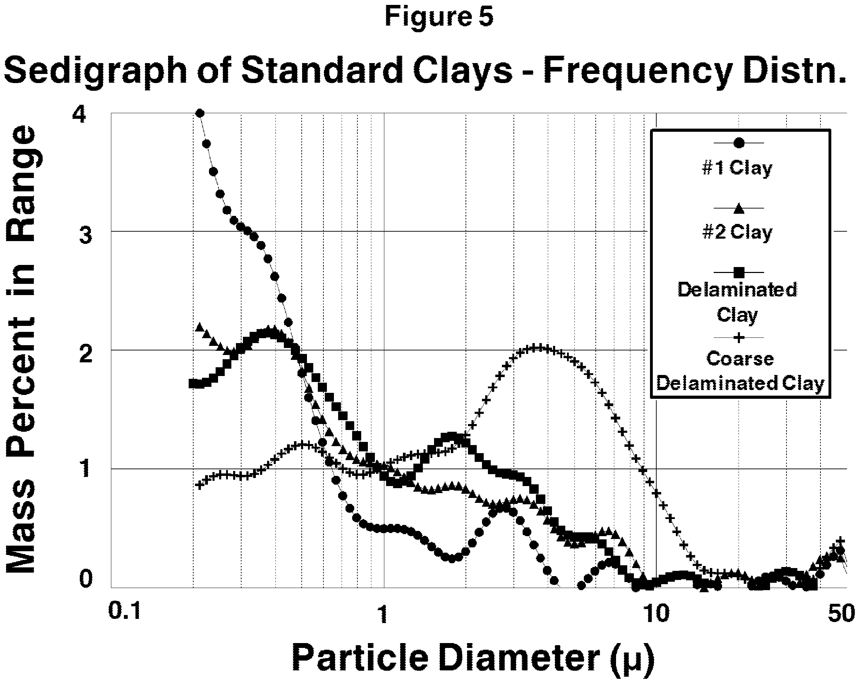

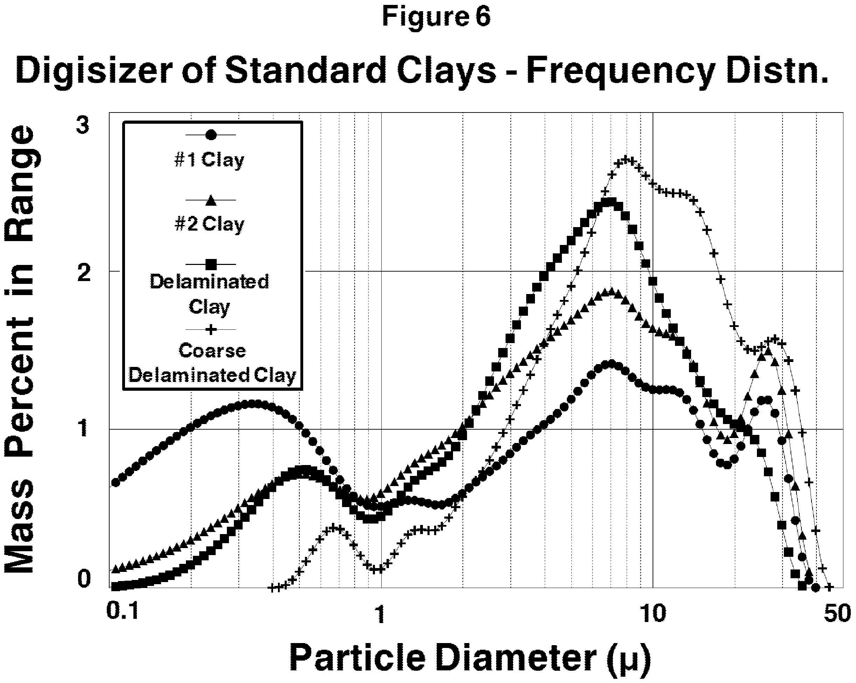

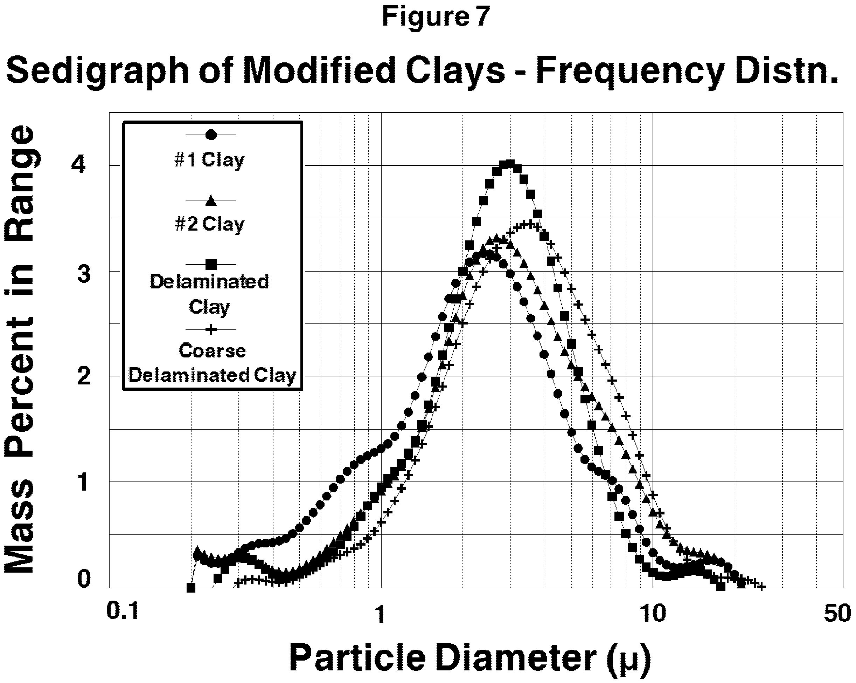

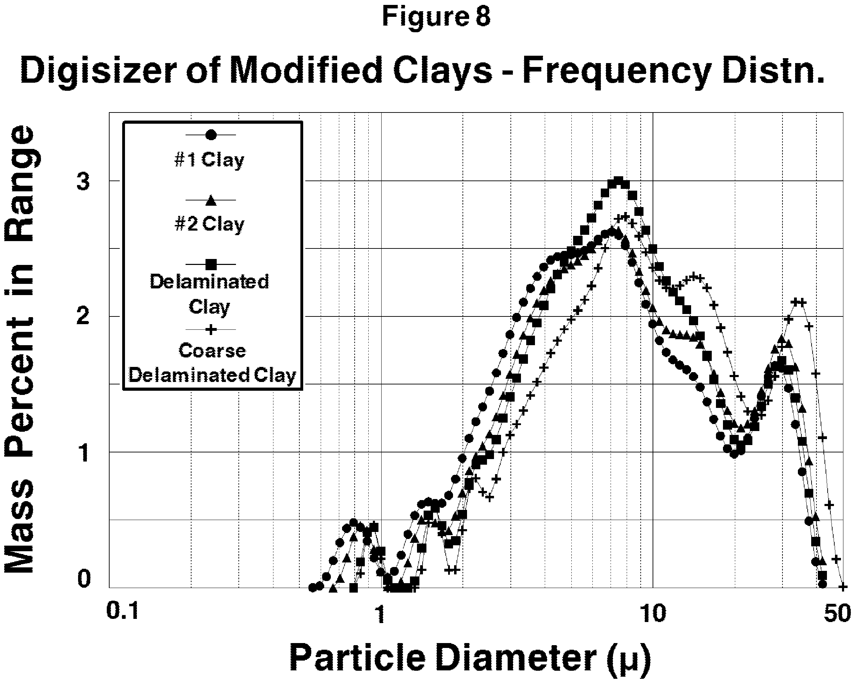

The cumulative particle size distributions in Figures 1-4 may be compared with corresponding frequency distributions in Figures 5-8. The 'standard' clays as seen in Figures 5-6 generally have multimodal distributions, while the 'modified' clays as seen in Figures 7-8 have more uniform distributions, especially in Figure 7 where the Sedigraph data for each of the four modified clays exhibit a unimodal and nearly normal (Gaussian) frequency distribution. Commercial clays are intentionally made with broad particle size distributions because this gives them good fluid flow properties and lower viscosity.

The original and the modified versions of the clays from example 1 were tested for packing density as measured by sediment void volume. Sediment void volume is reported as sediment void volume percentage and is measured as follows: The clay is diluted with water to 50% by weight solids. A 70g sample of the resulting slurry is centrifuged at 8000g for 90 minutes using a Fisher Scientific accuSpin 400 centrifuge. The supernatant water is poured off and weighed, from which the weight of water held by voids within the sediment is known. The weight of the clay is also known. From the density of water and the clay particle density, the percent volume of the voids can be calculated.

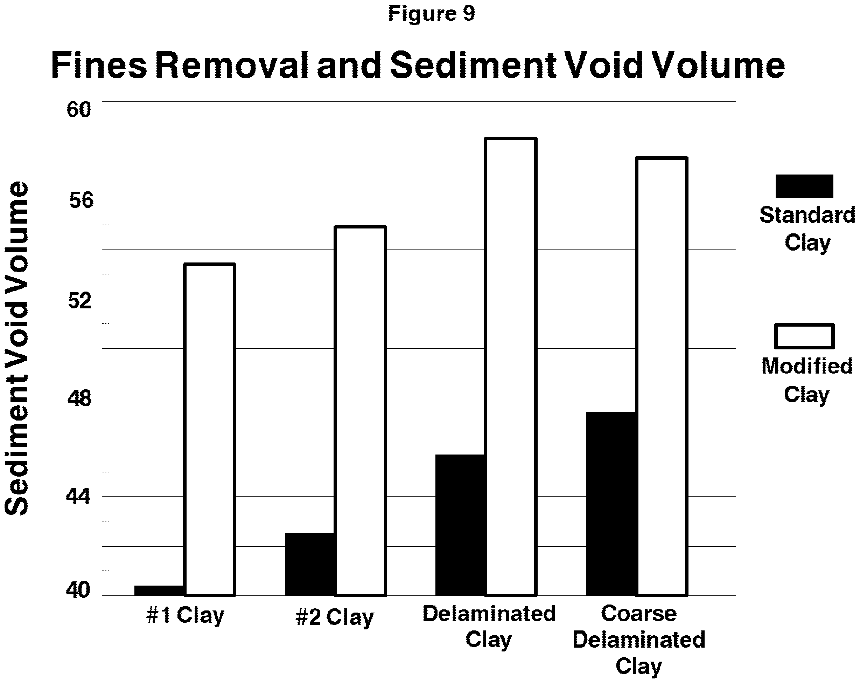

Figure 9 is a bar chart shows the marked increase of sediment void volume for the modified clays. The sediment void volume of the standard clays ranges from about 40 to 47%, while the sediment void volume of the modified clays is significantly greater and ranges from 51 to 57%.

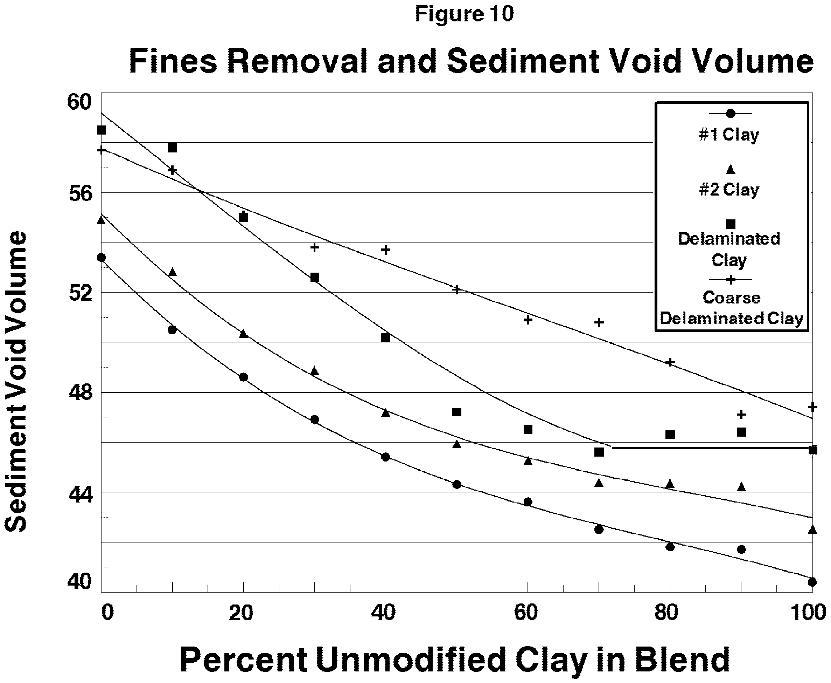

Figure 10 shows sediment void volumes for mixtures of each standard clay with its respective modified clay, ranging from the left side of the graph (all modified clay=no standard clay) to the right side of the graph (all standard clay=no modified clay). This simulates the sequential removal of fines from the standard clay. The sediment void volume is a somewhat smooth and monotonic function of the modified clay percent in the mixture.

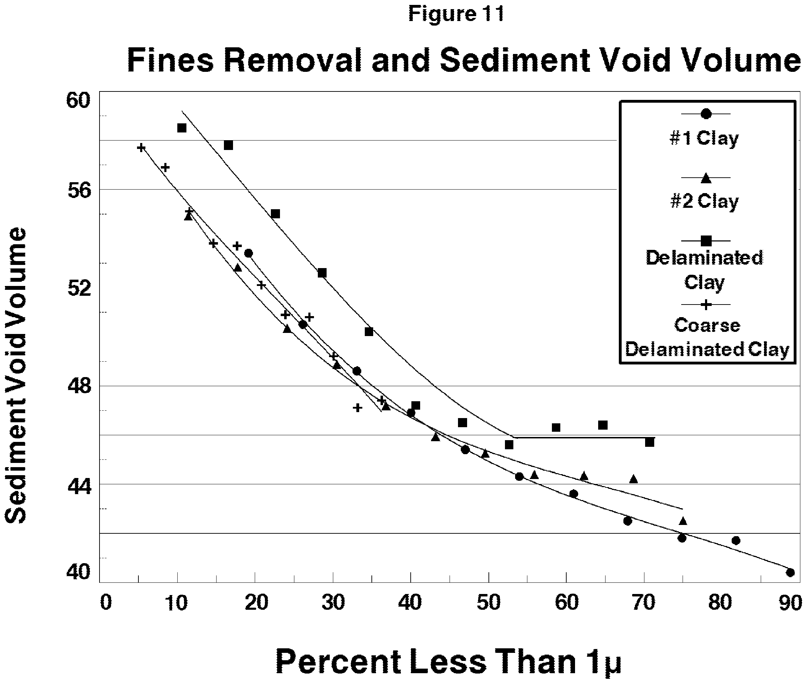

In Figure 11, the data of Figure 10 is replotted with a different x axis, namely, the percent of the clay weight corresponding to particles of less than 1 micrometre diameter. This shows the clear relationship between the level of fine particles and pigment packing. The fewer small particles in the clay, the higher the sediment void volume. This figure also shows that the performance of the four pigments is very similar even though they differ in terms of average particle size and size distributions.

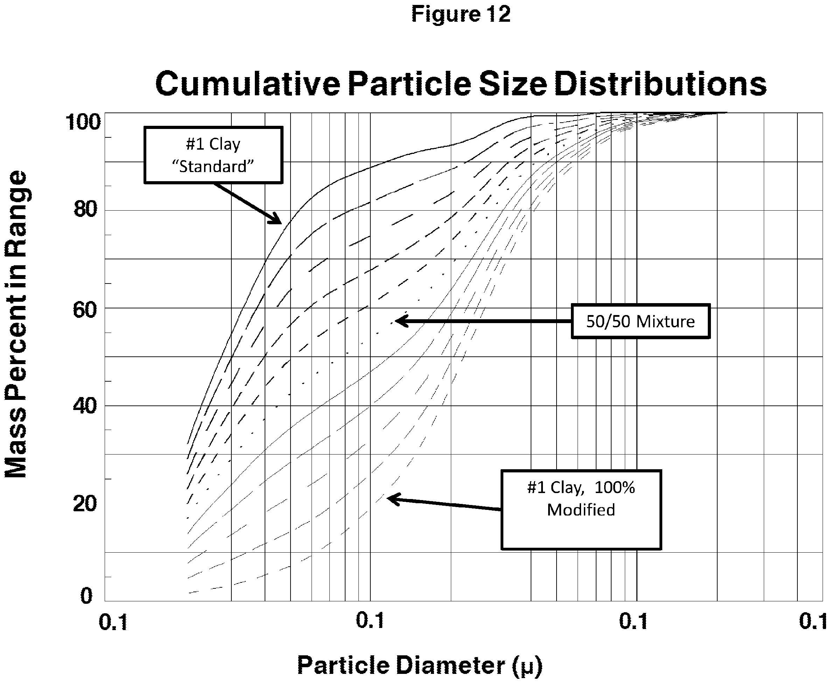

Figure 12 is an example of the particle size distributions resulting from the blends shown in Figures 10 and 11. It shows calculated Sedigraph data of cumulative particle size distributions for various mixtures of the #1 clay standard and modified versions. These distributions were calculated by proportionally averaging the distribution values from standard and modified #1 clay measurements. The data for the standard clay was taken from Figure 1, and the data for the modified clay was taken from Figure 3. Similar curves were generated for the #2, delaminated and coarse delaminated clays.

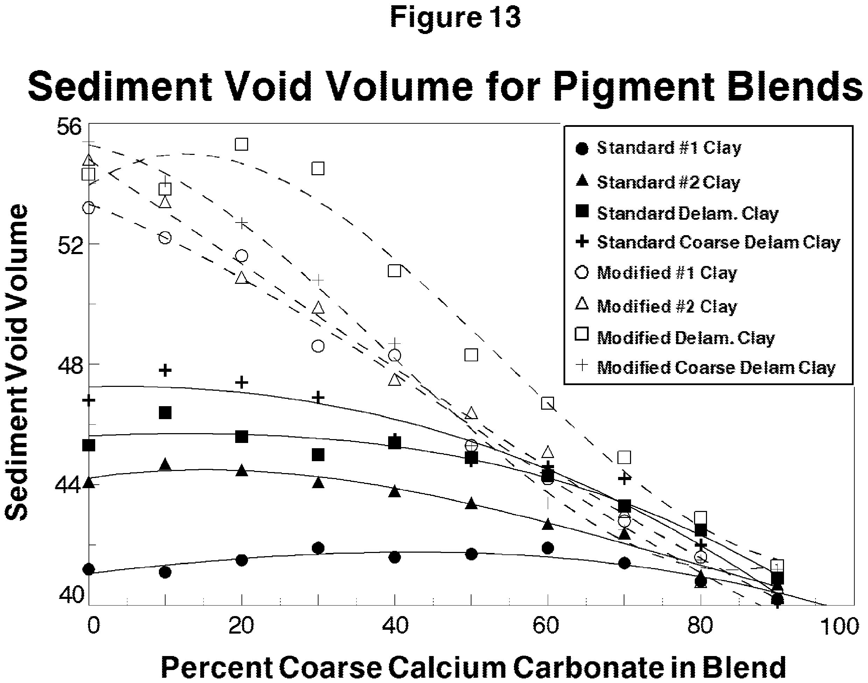

Modified clay can be used in conjunction with other pigments. Both the standard and modified clays were blended with HYDROCARB® 60, a coarse ground calcium carbonate from Omya. Figure 13 shows the sediment void volume of the blends. The curves clearly show that the modified clays give higher sediment void volume than the standard clays, even when blended with ground calcium carbonate. The maximum difference between standard and modified clays are shown for carbonate levels of 20-30%, but clear differences are seen for carbonate levels as high 60% carbonate.

Another way that clays are characterized is by their shape factor. Clays have a plate-like shape. The shape factor is ratio of plate diameter to plate thickness. There are several ways to characterize the shape factor. The method used here is published by Pabst et al. (Part. Part. Syst. Charact. 24 (2007) 458-463). It may be useful to characterize the modified clays with a single number, such as a shape factor value. Diameter values from Sedigraph ($D_S$) and Digisizer ($D_D$) are used to calculate a shape factor or aspect ratio, as outlined in *Pabst et al.*

$$\text{Shape factor} = 3/2 \ \pi \ (D_D/ D_S)^2$$

The calculation requires a specific diameter value from each measurement method. There being many different sized particles in any of the clays here, choosing representative particle sizes from the standard clay multimodal particle size distributions seems arbitrary. Furthermore, the shape factor is recognized as varying throughout the size range of any given clay. However, the generally unimodal data of the modified clays provides a logical single-point representative diameter. For example, the Sedigraph and Digisizer data may be matched at the median (midpoint) diameter of the cumulative distribution, or at the mode (highest) diameter of the frequency distributions.

The results based on median and modal diameter are shown in the first two columns of data in Table 1. Either of these methods can be considered valid, but as the table shows, the two methods may give quite different values.

TABLE 1. Shape Factors of Modified Clays

| | Shape Factor from Median Diameter | Shape Factor from Modal Diameter | Avg Shape Factor from Tables 2-5 |
|---|---|---|---|
| #1 Clay | 41.8 | 39.5 | 53.7 |
| #2 Clay | 33.2 | 33.3 | 33.7 |
| Delaminated Clay | 29.5 | 38.2 | 43.2 |
| Coarse Delaminated Clay | 23.5 | 38.4 | 33.5 |

The shape factor values for the modified #1 and #2 clays are larger than the value of 15 that is generally accepted for these materials. However, all are well below the value of 60 which is typically viewed as the lower threshold shape factor of hyperplaty clays.

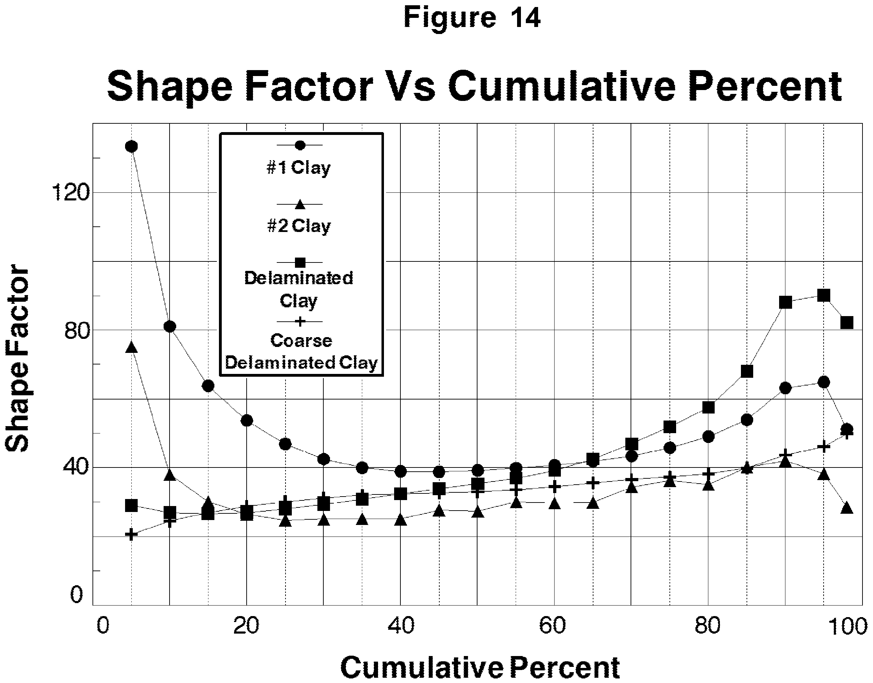

Because the two methods above for measuring shape factor give differing values, a third method was used here that represents an average over the entire size distribution. By taking the particle size values from the cumulative size distributions at increments of 5%, shape factor distributions were calculated that correspond to the size distributions. To further explore the shape factor across a range of particle diameters, the shape factor was calculated from the Sedigraph and Digisizer diameter measurements at 5% increments across the cumulative particle size distributions. This produced a distribution of shape factors for the entire spectrum of particle size. Data for each of the four modified clays is shown in Tables 2-5. These distributions are shown graphically in Figure 14. The graph shows that shape factor is not uniform, but instead varies significantly depending on particle size. Because of this, we choose to characterize each pigment by its average shape factor. We calculate this as the arithmetic average of the shape factor values is Tables 1-4. The average shape factors for the modified clays ranged from 33.5 for the coarse delaminated clay to 53.7 for the #1 clay, so all are well below the value of 70 which is the lower threshold of hyperplaty clays.

The novel modified clays are thus seen to have shape factors less than 60, sediment void volumes generally greater than about 48, and percent fines below 1 micron of about 30% or less. The modified clays may provide beneficial effects alone or in mixtures with other clays. The modified clays may be useful in paper coatings, particularly in base coatings; in paints, and in other industrial materials.

The fines content of the modified clay may be relatively low. In one expression, at most about 30 percent by weight of the clay particles may have a particle size less than 1 micrometer as measured by Sedigraph. In another expression, at most about 25 percent by weight of the clay particles may have a particle size less than 1 micrometer as measured by Sedigraph. In another expression, at most about 20 percent by weight of the clay particles may have a particle size less than 1 micrometer as measured by Sedigraph.

The sediment void volume of the modified clays may be relatively high. Sediment void volumes may generally range from about 48 to 60%; or from about 50 to 60%, or from about 52 to 60%, or from about 55 to 60%.

The average shape factor of the modified clays will be less than 60.

Table 2. Calculated shape factor for (modified) #1 clay

| Cumulative Percent | Sedigraph Diameter | Digisizer Diameter | Shape Factor |
|---|---|---|---|
| 5 | 0.27 | 1.41 | 133.4 |
| 10 | 0.49 | 2.04 | 81.1 |
| 15 | 0.69 | 2.53 | 63.8 |
| 20 | 0.88 | 2.97 | 53.7 |
| 25 | 1.08 | 3.39 | 46.9 |
| 30 | 1.27 | 3.83 | 42.5 |
| 35 | 1.47 | 4.28 | 40.0 |
| 40 | 1.66 | 4.77 | 38.9 |
| 45 | 1.85 | 5.31 | 38.8 |
| 50 | 2.04 | 5.89 | 39.2 |
| 55 | 2.25 | 6.54 | 39.8 |
| 60 | 2.47 | 7.26 | 40.7 |
| 65 | 2.72 | 8.10 | 41.8 |
| 70 | 3.01 | 9.12 | 43.3 |
| 75 | 3.36 | 10.46 | 45.7 |
| 80 | 3.80 | 12.27 | 49.0 |
| 85 | 4.40 | 14.89 | 53.9 |
| 90 | 5.26 | 19.26 | 63.2 |
| 95 | 6.68 | 24.80 | 64.8 |

(continued)

| Cumulative Percent | Sedigraph Diameter | Digisizer Diameter | Shape Factor |
|---|---|---|---|
| **Average Shape Factor** | | | **53.7** |

Table 3. Calculated shape factor for (modified) #2 clay

| Cumulative Percent | Sedigraph Diameter | Digisizer Diameter | Shape Factor |
|---|---|---|---|
| 5 | 0.35 | 1.38 | 75.1 |
| 10 | 0.73 | 2.08 | 38.0 |
| 15 | 1.03 | 2.61 | 30.0 |
| 20 | 1.30 | 3.08 | 26.4 |
| 25 | 1.54 | 3.53 | 24.7 |
| 30 | 1.73 | 4.00 | 25.0 |
| 35 | 1.94 | 4.49 | 25.1 |
| 40 | 2.18 | 5.02 | 25.1 |
| 45 | 2.31 | 5.60 | 27.6 |
| 50 | 2.59 | 6.23 | 27.3 |
| 55 | 2.75 | 6.93 | 30.0 |
| 60 | 3.08 | 7.73 | 29.7 |
| 65 | 3.45 | 8.68 | 29.9 |
| 70 | 3.66 | 9.88 | 34.3 |
| 75 | 4.10 | 11.39 | 36.3 |
| 80 | 4.87 | 13.30 | 35.1 |
| 85 | 5.47 | 15.96 | 40.1 |
| 90 | 6.88 | 20.54 | 42.0 |
| 95 | 9.17 | 26.12 | 38.2 |
| **Average Shape Factor** | | | **33.7** |

Table 4. Calculated shape factor for (modified) delaminated clay

| Cumulative Percent | Sedigraph Diameter | Digisizer Diameter | Shape Factor |
|---|---|---|---|
| 5 | 0.75 | 1.86 | 29.0 |
| 10 | 1.10 | 2.62 | 26.9 |
| 15 | 1.36 | 3.22 | 26.6 |
| 20 | 1.58 | 3.77 | 26.9 |
| 25 | 1.77 | 4.32 | 27.9 |
| 30 | 1.96 | 4.88 | 29.2 |
| 35 | 2.14 | 5.47 | 30.8 |
| 40 | 2.32 | 6.09 | 32.4 |
| 45 | 2.51 | 6.74 | 33.9 |
| 50 | 2.71 | 7.42 | 35.3 |

(continued)

| Cumulative Percent | Sedigraph Diameter | Digisizer Diameter | Shape Factor |
|---|---|---|---|
| 55 | 2.92 | 8.18 | 36.9 |
| 60 | 3.15 | 9.08 | 39.2 |
| 65 | 3.40 | 10.21 | 42.5 |
| 70 | 3.68 | 11.62 | 46.9 |
| 75 | 4.01 | 13.32 | 51.9 |
| 80 | 4.41 | 15.41 | 57.4 |
| 85 | 4.92 | 18.70 | 68.0 |
| 90 | 5.64 | 24.39 | 88.2 |
| 95 | 6.79 | 29.69 | 90.1 |
| **Average Shape Factor** | | | **43.2** |

Table 5. Calculated shape factor for (modified) coarse delaminated clay

| Cumulative Percent | Sedigraph Diameter | Digisizer Diameter | Shape Factor |
|---|---|---|---|
| 5 | 0.98 | 2.05 | 20.6 |
| 10 | 1.26 | 2.88 | 24.5 |
| 15 | 1.50 | 3.58 | 26.9 |
| 20 | 1.72 | 4.26 | 28.7 |
| 25 | 1.95 | 4.92 | 30.1 |
| 30 | 2.18 | 5.62 | 31.2 |
| 35 | 2.43 | 6.33 | 32.0 |
| 40 | 2.69 | 7.04 | 32.4 |
| 45 | 2.96 | 7.79 | 32.6 |
| 50 | 3.25 | 8.60 | 32.9 |
| 55 | 3.57 | 9.52 | 33.5 |
| 60 | 3.91 | 10.58 | 34.5 |
| 65 | 4.29 | 11.80 | 35.5 |
| 70 | 4.73 | 13.18 | 36.5 |
| 75 | 5.25 | 14.76 | 37.3 |
| 80 | 5.87 | 16.72 | 38.1 |
| 85 | 6.69 | 19.45 | 39.9 |
| 90 | 7.85 | 23.90 | 43.6 |
| 95 | 9.97 | 31.20 | 46.1 |
| **Average Shape Factor** | | | **33.5** |

**Claims**

1. A composition comprising:

   an amount of clay particles having an average shape factor below 60, a sediment void volume greater than 48%, and less than 30% by mass of particles less than 1 micrometer in size as measured by Sedigraph, wherein the sediment void volume is measured as follows:

dispersing the clay in water to form a slurry at 50% by weight solids;
centrifuging a 70g sample of the slurry at 8000g for 90 minutes;
pouring the supernatant water off the settled clay and weighing the supernatant water X;
determining the weight of remaining water in the settled clay as Y= 70/2-X (g);
determining the volume of the remaining water as Vw=Y/1 g/cc;
determining the volume of the clay Vc as 70/2 /Z, where Z is a known density of the clay in g/cc; and
determining the void volume percent as Vw / (Vw+Vc) *100%.

2. The composition of claim 1, wherein the sediment void volume is greater than 50%.

3. The composition of claim 1, wherein the sediment void volume is greater than 52%.

4. The composition of claim 1, wherein the sediment void volume is greater than 55%.

5. The composition of claim 1, wherein the sediment void volume is greater than 50%, and less than 25% by mass of particles are less than 1 micrometer in size as measured by Sedigraph.

6. The composition of claim 5, wherein the sediment void volume is greater than 52%.

7. The composition of claim 5, wherein the sediment void volume is greater than 55%.

8. The composition of claim 1, wherein the sediment void volume is greater than 50%, and less than 20% by mass of particles are less than 1 micrometer in size as measured by Sedigraph.

9. The composition of claim 8, wherein the sediment void volume is greater than 52%.

10. The composition of claim 8, wherein the sediment void volume is greater than 55%.

11. A composition comprising:
an amount of clay particles having an average shape factor below 60, a sediment void volume greater than 52% as measured using the method defined in claim 1, and less than 18% by mass of particles less than 1 micrometer in size as measured by Sedigraph.

12. The composition of claim 11, wherein the sediment void volume is greater than 55%.

13. Use of a composition as claimed in any preceding claim in the manufacture of a paper or paperboard coating, a paint or an industrial or architectural coating.

14. Paper or paperboard comprising a composition as claimed in any of claims 1 to 12.

15. Paint comprising a composition as claimed in any of claims 1 to 12.


**Patentansprüche**

1. Zusammensetzung, umfassend:

eine Menge an Tonpartikeln mit einem durchschnittlichen Formfaktor unter 60, einem Sedimenthohlraumvolumen von mehr als 48% und weniger als 30 Massen-% von Partikeln mit einer Größe von weniger als 1 Mikrometer, gemessen mittels Sedigraph;
wobei das Sedimenthohlraumvolumen wie folgt gemessen wird:

Dispergieren des Tons in Wasser, um eine Aufschlämmung mit 50 Gew.-% Feststoffen zu bilden;
Zentrifugieren einer 70 g-Probe der Aufschlämmung bei 8000 g für 90 Minuten;
Abgießen des Überstandswassers von dem abgesetzten Ton und Wiegen des Überstandswassers X;

Bestimmen des Gewichts des verbleibenden Wassers im abgesetzten Ton als Y = 70/2-X (g);
Bestimmen des Volumens des verbleibenden Wassers als Vw = Y/1 g/cc;
Bestimmen des Volumens des Tons Vc als 70/2 /Z, wobei Z eine bekannte Dichte des Tons in g/cc ist; und
Bestimmen des Hohlraumvolumenprozentsatzes als Vw / (Vw + Vc) * 100%.

**2.** Zusammensetzung nach Anspruch 1, wobei das Sedimenthohlraumvolumen größer als 50% ist.

**3.** Zusammensetzung nach Anspruch 1, wobei das Sedimenthohlraumvolumen größer als 52% ist.

**4.** Zusammensetzung nach Anspruch 1, wobei das Sedimenthohlraumvolumen größer als 55% ist.

**5.** Zusammensetzung nach Anspruch 1, wobei das Sedimenthohlraumvolumen größer als 50% ist, und weniger als 25 Massen-% der Partikel kleiner als 1 Mikrometer sind, gemessen mittels Sedigraph.

**6.** Zusammensetzung nach Anspruch 5, wobei das Sedimenthohlraumvolumen größer als 52% ist.

**7.** Zusammensetzung nach Anspruch 5, wobei das Sedimenthohlraumvolumen größer als 55% ist.

**8.** Zusammensetzung nach Anspruch 1, wobei das Sedimenthohlraumvolumen größer als 50% ist, und weniger als 20 Massen-% der Partikel kleiner als 1 Mikrometer sind, gemessen mittels Sedigraph.

**9.** Zusammensetzung nach Anspruch 8, wobei das Sedimenthohlraumvolumen größer als 52% ist.

**10.** Zusammensetzung nach Anspruch 8, wobei das Sedimenthohlraumvolumen größer als 55% ist.

**11.** Zusammensetzung, umfassend:
eine Menge an Tonpartikeln mit einem durchschnittlichen Formfaktor unter 60, einem Sedimenthohlraumvolumen von mehr als 52% wie unter Verwendung des in Anspruch 1 definierten Verfahrens gemessen, und weniger als 18 Massen-% von Partikeln mit einer Größe von weniger als 1 Mikrometer, gemessen mittels Sedigraph.

**12.** Zusammensetzung nach Anspruch 11, wobei das Sedimenthohlraumvolumen größer als 55% ist.

**13.** Verwendung einer Zusammensetzung gemäß einem der vorhergehenden Ansprüche bei der Herstellung einer Papier- oder Pappenbeschichtung, einer Farbe oder einer industriellen oder architektonischen Beschichtung.

**14.** Papier oder Pappe, die eine Zusammensetzung gemäß einem der Ansprüche 1 bis 12 umfasst.

**15.** Farbe, die eine Zusammensetzung nach einem der Ansprüche 1 bis 12 umfasst.

## Revendications

**1.** Composition comprenant :

une quantité de particules d'argile ayant un facteur de forme moyen inférieur à 60, un volume de vides de sédiment supérieur à 48 %, et moins de 30 % en masse de particules de taille inférieure à 1 micromètre, telle que mesurée à l'aide d'un sédigraphe,
dans laquelle le volume de vides de sédiment est mesuré comme suit :

disperser l'argile dans de l'eau pour former une suspension à 50 % en poids de solides ;
centrifuger un échantillon de 70 g de la suspension à 8 000 g pendant 90 minutes ;
séparer l'eau surnageante de l'argile sédimentée et peser l'eau surnageante X ;
déterminer le poids de l'eau restante dans l'argile sédimentée en tant que Y = 70/2-X (g) ;
déterminer le volume de l'eau restante en tant que Vw = Y/1 g/cm$^3$ ;
déterminer le volume Vc de l'argile en tant que 70/2/Z, où Z est une densité connue de l'argile en g/cm$^3$ ;
et déterminer le pourcentage du volume de vides en tant que Vw / (Vw+Vc)*100 %.

**2.** Composition selon la revendication 1, dans laquelle le volume de vides de sédiment est supérieur à 50 %.

**3.** Composition selon la revendication 1, dans laquelle le volume de vides de sédiment est supérieur à 52 %.

**4.** Composition selon la revendication 1, dans laquelle le volume de vides de sédiment est supérieur à 55 %.

**5.** Composition selon la revendication 1, dans laquelle le volume de vides de sédiment est supérieur à 50 %, et moins de 25 % en masse des particules ont une taille inférieure à 1 micromètre, telle que mesurée à l'aide d'un sédigraphe.

**6.** Composition selon la revendication 5, dans laquelle le volume de vides de sédiment est supérieur à 52 %.

**7.** Composition selon la revendication 5, dans laquelle le volume de vides de sédiment est supérieur à 55 %.

**8.** Composition selon la revendication 1, dans laquelle le volume de vides de sédiment est supérieur à 50 %, et moins de 20 % en masse des particules ont une taille inférieure à 1 micromètre, telle que mesurée à l'aide d'un sédigraphe.

**9.** Composition selon la revendication 8, dans laquelle le volume de vides de sédiment est supérieur à 52 %.

**10.** Composition selon la revendication 8, dans laquelle le volume de vides de sédiment est supérieur à 55 %.

**11.** Composition comprenant :
une quantité de particules d'argile ayant un facteur de forme moyen inférieur à 60, un volume de vides de sédiment supérieur à 52 %, tel que mesuré en utilisant la méthode définie dans la revendication 1, et moins de 18 % en masse de particules de taille inférieure à 1 micromètre, telle que mesurée à l'aide d'un sédigraphe

**12.** Composition selon la revendication 11, dans laquelle le volume de vides de sédiment est supérieur à 55 %.

**13.** Utilisation d'une composition selon l'une quelconque des revendications précédentes dans la fabrication d'un revêtement pour papier ou carton, d'une peinture ou d'un revêtement industriel ou architectural.

**14.** Papier ou carton comprenant une composition selon l'une quelconque des revendications 1 à 12.

**15.** Peinture comprenant une composition selon l'une quelconque des revendications 1 à 12.

Figure 1

## Sedigraph of Standard Clays - Cumulative Distn.

Figure 2

## Figure 3

## Sedigraph of Modified Clays - Cumulative Distn.

EP 3 484 962 B1

Figure 4

# Figure 5

## Sedigraph of Standard Clays - Frequency Distn.

EP 3 484 962 B1

Figure 6

Digisizer of Standard Clays - Frequency Distn.

Mass Percent in Range

Particle Diameter (µ)

Legend:
- ● #1 Clay
- ▲ #2 Clay
- ■ Delaminated Clay
- + Coarse Delaminated Clay

# Figure 7

## Sedigraph of Modified Clays - Frequency Distn.

Figure 8

Digisizer of Modified Clays - Frequency Distn.

EP 3 484 962 B1

Figure 9

Fines Removal and Sediment Void Volume

Figure 10

# Fines Removal and Sediment Void Volume

**Percent Unmodified Clay in Blend**

Sediment Void Volume

Legend:
- ● #1 Clay
- ▲ #2 Clay
- ■ Delaminated Clay
- + Coarse Delaminated Clay

EP 3 484 962 B1

Figure 11

## Fines Removal and Sediment Void Volume

EP 3 484 962 B1

Figure 12

**Cumulative Particle Size Distributions**

# Figure 13

## Sediment Void Volume for Pigment Blends

Legend:
- ● Standard #1 Clay
- ▲ Standard #2 Clay
- ■ Standard Delam. Clay
- + Standard Coarse Delam Clay
- ○ Modified #1 Clay
- △ Modified #2 Clay
- □ Modified Delam. Clay
- + Modified Coarse Delam Clay

X-axis: Percent Coarse Calcium Carbonate in Blend

Y-axis: Sediment Void Volume

EP 3 484 962 B1

Figure 14

# Shape Factor Vs Cumulative Percent

EP 3 484 962 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8142887 B, Fugitt
- US 20090239047 A
- US 20100266819 A
- EP 296866 A

**Non-patent literature cited in the description**

- **PABST et al.** *Part. Part. Syst. Charact.,* 2007, vol. 24, 458-463